# EUROPEAN PATENT APPLICATION

(11) **EP 1 453 052 A2**
(43) Date of publication of application: **01.09.2004**
(21) Application number: 04250926.5
(22) Date of filing: 20.02.2004
(51) Int. Cl.: G11B 20/10, G11B 20/00

(54) **Information-providing system apparatus method and program recorded on recording medium for providing information apparatus for recording information and program recorded on recording medium for recording infromation**

(30) Priority: 25.02.2003 JP 2003047587
(71) Applicant: Pioneer Corporation, Meguro-ku, Tokyo (JP)
(72) Inventor: Shibasaki, Hiroaki, Meguro-ku Tokyo-to (JP); Yamaha, Mitsuhiro, Yamada Kawagoe-shi Saitama-ken (JP)
(74) Representative: Haley, Stephen

(57) **Abstract**

The object of this invention is to properly acquire music data from a CD to one's own memory via a network instead of by CD ripping, even when the CD is a so-called CCCD having copyright protection information for preventing illegal copying. When an automobile-AV apparatus acquires TOC information that corresponds to music data recorded on a CD and then records the music data that is recorded on the CD on to a HD, it comprises an HD recording unit that sends the acquired TOC information to a service server via a network, and then receives the corresponding information that is related to the music data and that is sent from the service server and records the received corresponding information on to the HD.

## Description

This invention relates to an information-providing system, information-recording apparatus, information -providing apparatus, and information-providing method that provide information over a network.

In recent years, information-recording/reproduction apparatuses that are capable of recording music data recorded on a CD (Compact Disc) to a HD, or is capable of performing so-called ' CD ripping' are known, and with this kind of apparatus, a user is able to, for example, record the music data recorded on several CDs purchased by the user onto a HD. Particularly, in the case when the apparatus is for use in an automobile, it makes it possible to do away the troublesome task of having to bring several CDs to the automobile each time the user uses the automobile. (For example, refer to Japanese Laid-Open patent application no. 2000-268543).

However, when the CD is a so-called CCCD (Copy Controlled Compact Disc) for which recording of program data such as music data recorded on the CD is restricted, such as in the case of the aforementioned CD ripping using a personal computer (PC), from the aspect of protecting the copyright of the recorded music data, there was a inconvenience in that it was not possible to record onto the HD (Hard Disk) installed in the user's own apparatus, such as the AV (Audio Visual) apparatus for an automobile, even though the CD may have been purchased properly by the user.

With the aim of removing the inconvenience mentioned above, the object of the present invention is to provide an information-providing system and information-providing program that are capable of providing the user with corresponding data related to program information, when recording program information recorded on one recording medium having protection information for copyright protection to another recording medium.
(1) The above object of the present invention is accomplished by an information-providing system having an information-providing apparatus that provides information over a network and an information-recording apparatus that is able to access the information-providing apparatus via the network; and where the information-recording apparatus comprises: an ID-information-acquisition device which acquires ID information that corresponds to program information recorded on a recording medium; a protection-information-recognition device that recognizes whether or not the recording medium has protection information for copyright protection of the program information when recording the program information recorded on the recording medium to another recording medium; an ID-information-sending device which sends the ID-information to the information-providing apparatus via the network when protection information is recognized by the protection-information-recognition device; a corresponding-information-receiving device that receives corresponding information related to the program information and that is sent from the information-providing apparatus via the network according to the ID information; and an information-recording device which records the corresponding information that was received by the corresponding -information-receiving device on to another recording medium instead of the program information; and where the information-providing apparatus comprises: an ID-information-receiving device that receives the ID information sent from the information-recording apparatus via the network; a corresponding-information-acquisition device that acquires the corresponding information based on the ID information; and a corresponding-information-sending device which sends the corresponding information to the information-recording apparatus via the network.
   According to the present invention, ID information such as TOC information that corresponds to program information such as music data is acquired from the a recording medium, and based on that information, it is possible to acquire corresponding information related to that program information from an information-providing apparatus such as a service server, so the user is able to record the corresponding information that is related to the program information onto another recording medium owned by the user even when the purchased CD (Compact Disc) is a CD having protection information for protecting the copyright of that program information.
(2) In one aspect of the present invention, when recording program information that is recording on one recording medium onto another recording medium, the information recording apparatus records corresponding information onto another recording medium instead of the program information by way of the ID-information-sending device and corresponding -information-receiving device when it is not possible to record the program information from one recording medium to another recording medium regardless of whether or not there is protection information.
   According to the present invention, ID information such as TOC information that corresponds to program information such as music data is acquired from the a recording medium, and based on that information, it is possible to acquire corresponding information related to that program information from an information-providing apparatus such as a service server, so the user is able to record the corresponding information that is related to the program information onto another recording medium owned by the user.
(3) In another aspect of the present invention, the information-recording apparatus further comprises: a trial-information-receiving device which receives trial information that is related to the program information and that is sent from the information-providing apparatus according to the ID information via the network; an information-reproduction device which reproduces the received trial information; and a corresponding-information-request device which prompts the user to request corresponding information after the trial information has been reproduced by the information-reproduction device; and where the information-providing apparatus further comprises: a trial-information-acquisition device which acquires trial information based on the ID information; and a trial-information-sending device which sends the trial information to the information-recording apparatus via the network; and where the corresponding-information-sending device sends corresponding information to the information-recording apparatus only when there was a request from the information-recording apparatus for corresponding information.
   According to the present invention, by acquiring trial information such as trial-listening information before acquiring the corresponding information, the user has a chance to listen to the trial information and select whether or not to acquire the corresponding information, and thus it is possible to for the user to not have to acquire corresponding information unnecessarily.
(4) In a further aspect of the present invention, the information-recording apparatus further comprises: a user-information-acquisition device which acquires user information that is set for each apparatus or for each recording medium; and a user-information-sending device which sends the acquired user information to the information-providing apparatus via the network; and where the information-providing apparatus further comprises a user-information-receiving device for receiving the user information sent from the information-recording apparatus; and where the corresponding-information-sending device determines based on the user information whether or not access is improper access, and when it determines that access is improper access, it does not send the corresponding information to the information-recording apparatus.
   According to the present invention, by having the information-providing apparatus, such as a service server, manage the user information, it is possible to know how many times there was access from an information-recording apparatus such as an automobile-AV apparatus, and when there is access many times from same apparatus, it is possible to prevent improper access by not sending the corresponding information.
(5) In a further aspect of the present invention, the information-recording apparatus further comprises a cost-information-receiving device which receives the cost corresponding to the corresponding information via the network; and where the information-providing apparatus further comprises: a cost-information-acquisition device which acquires the cost information; and a cost-information-sending device which sends the acquired cost information to the information-recording apparatus via the network.
   According to the present invention, by sending cost information, such as the billed cost, which is calculated by a pre-determined calculation method, or the cost set for each music data, or discount information to the information-recording apparatus, such as an automobile-AV apparatus, it is possible to notify the user of the cost information for the corresponding information.
(6) In a further aspect of the present invention, the information-providing apparatus further comprises a user-information-management device which manages the user information; and where the cost-information-acquisition device acquires cost information based on the user information managed by the user-information-management device.
   According to the present invention, it is possible to set the cost information based on user information such as the number of times of access, delinquent payment information, or the like.
(7) In a further aspect of the present invention, the information-recording apparatus further comprises a cost-information-supply device which supplies the user with the cost information; and where the corresponding -information-request device prompts the user to request corresponding information after the cost information has been supplied to the user by the cost-information-supply device.
   According to the present invention, it is possible for the user to use the cost information to check the fee (cost) for acquiring the corresponding information, and decide whether or not to acquire the corresponding information before actually acquiring the corresponding information.
(8) In a further aspect of the present invention, the cost information is information showing the bill for the corresponding information.
   According to the present invention, it is possible to use the cost information to check the total fee (cost) for acquiring the corresponding information.
(9) In a further aspect of the present invention, the recording medium is a removable-type recording medium that is owned by the user.
   According to the present invention, the user is able to record the corresponding information that is related to the program information onto another recording medium owned by the user even when the purchased CD (Compact Disc) is a CD having protection information for protecting the copyright of that program information.
(10) In a further aspect of the present invention, the information-recording device correlates the corresponding information with the ID information and records them on another recording medium.
   According to the present invention, the user is able to record the corresponding information that is related to the program information onto another recording medium owned by the user even when the purchased CD (Compact Disc) is a CD having protection information for protecting the copyright of that program information.
(11) In a further aspect of the present invention, the ID-information-sending device determines whether or not the corresponding information correlated with the ID information is recorded on the other recording medium, and when it is determined that it is recorded, it does not send the ID information.
(12) The above object of the present invention is accomplished by an information-recording apparatus that can access an information-providing apparatus via a network and comprising: an ID-information-acquisition device which acquires ID information that corresponds to program information recorded on a recording medium; a protection-information-recognition device that recognizes whether or not the recording medium has protection information for copyright protection of the program information when recording the program information recorded on the recording medium to another recording medium; an ID-information-sending device which sends the ID-information to the information-providing apparatus via the network when protection information is recognized; a corresponding-information-receiving device that receives corresponding information related to the program information and that is sent from the information-providing apparatus via the network according to the ID information; and an information-recording device which records the corresponding information on to another recording medium.
   According to the present invention, ID information such as TOC information that corresponds to program information such as music data is acquired from the a recording medium, and based on that information, it is possible to acquire corresponding information related to that program information from an information-providing apparatus such as a service server, so the user is able to record the corresponding information that is related to the program information onto another recording medium owned by the user even when the purchased CD (Compact Disc) is a CD having protection information for protecting the copyright of that program information.
(13) In one aspect of the present invention, the information-recording apparatus further comprises: a user-information-acquisition device which acquires user information that is set for each apparatus, which comprises a trial-information-receiving device which receives trial information that is related to the program information and that is sent from the information-providing apparatus according to the ID information via the network, an information-reproduction device which reproduces the received trial information, and a corresponding -information-request device which prompts the user to request corresponding information after the trial information has been reproduced by the information-reproduction device for each apparatus or for each recording medium; and a user-information-sending device which sends the acquired user information to the information-providing apparatus via the network.
   According to the present invention, by acquiring trial information such as trial-listening information before acquiring the corresponding information, the user has a chance to listen to the trial information and select whether or not to acquire the corresponding information, and thus it is possible to for the user to not have to acquire corresponding information unnecessarily.
(14) In another aspect of the present invention, the information-recording apparatus further comprises: a user-information-acquisition device which acquires user information that is set for each apparatus or for each recording medium; and a user-information-sending device which sends the acquired user information to the information-providing apparatus via the network.
   According to the present invention, by having the information-providing apparatus, such as a service server, manage the user information, it is possible to know how many times there was access from an information-recording apparatus such as an automobile-AV apparatus, and when there is access many times from same apparatus, it is possible to prevent improper access by not sending the corresponding information.
(15) In a further aspect of the present invention, the information-recording apparatus further comprises a cost-information-receiving device which receives cost information according to the corresponding information via the network.
   According to the present invention, by sending cost information, such as the billed cost, which is calculated by a pre-determined calculation method, or the cost set for each music data, or discount information to the information-recording apparatus, such as an automobile-AV apparatus, it is possible to notify the user of the cost information for the corresponding information.
(16) In a further aspect of the present invention, the information-recording apparatus further comprises a cost-information-supply device which supplies the user with the cost information; and where the corresponding -information-request device prompts the user to request corresponding information after the cost information has been supplied to the user by the cost-information-supply device.
   According to the present invention, it is possible for the user to use the cost information to check the fee (cost) for acquiring the corresponding information, and decide whether or not to acquire the corresponding information before actually acquiring the corresponding information.
(17) The above object of the present invention is accomplished by an information-providing apparatus that provides information to an information-recording apparatus via a network and comprises: an ID-information-receiving device that receives the ID information that corresponds to the program information recorded on a recording medium and that is sent from the information-recording apparatus via the network; a corresponding-information-acquisition device that acquires the corresponding information related to the program information based on the ID information; and a corresponding-information-sending device which sends the corresponding information to the information-recording apparatus via the network.
   According to the present invention, ID information such as TOC information that corresponds to program information such as music data is acquired from the a recording medium, and based on that information, it is possible to acquire corresponding information related to that program information from an information-providing apparatus such as a service server, so the user is able to record the corresponding information that is related to the program information onto another recording medium owned by the user even when the purchased CD (Compact Disc) is a CD having protection information for protecting the copyright of that program information.
(18) In one aspect of the present invention, the information-providing apparatus further comprises: a trial-information-acquisition device which acquires trial information related to the program information based on the ID information; and a trial-information-sending device which sends trial information to the information-recording apparatus via the network; and where the corresponding-information-sending device sends corresponding information to the information-recording apparatus only when there is a request from the information-recording apparatus for corresponding information.
   According to the present invention, ID information such as TOC information that corresponds to program information such as music data is acquired from the a recording medium, and based on that information, it is possible to acquire corresponding information related to that program information from an information-providing apparatus such as a service server, so the user is able to record on to another recording medium owned by the user.
(19) In another aspect of the present invention, the information-providing apparatus further comprises a user-information-receiving device for receiving user information from the information-recording apparatus that was set for each information-recording apparatus or for each recording medium; and where the corresponding -information-sending device determines whether or not there was improper access based on the user information, and when it determines that there was improper access, it does not send corresponding information to the information-recording apparatus.
   According to the present invention, by having the information-providing apparatus, such as a service server, manage the user information, it is possible to know how many times there was access from an information-recording apparatus such as an automobile-AV apparatus, and when there is access many times from same apparatus, it is possible to prevent improper access by not sending the corresponding information.
(20) In another aspect of the present invention, the information-providing apparatus further comprises a cost-information-acquisition device which acquires cost information according to the corresponding information, and a cost-information-sending device which sends the cost information to the information-recording apparatus via the network.
   According to the present invention, by sending cost information, such as the billed cost, which is calculated by a pre-determined calculation method, or the cost set for each music data, or discount information to the information-recording apparatus, such as an automobile-AV apparatus, it is possible to notify the user of the cost information for the corresponding information.
(21) In another aspect of the present invention, the information-providing apparatus further comprises a user-information-management device which manages the user information; and where the cost-information-acquisition device acquires cost information based on the user information managed by the user-information-management device.
   According to the present invention, it is possible to set the cost information based on user information such as the number of times of access, delinquent payment information, or the like.
(22) In a further aspect of the present invention, a recording medium which is readable by a plurality of computers and that the program causes the plurality of computers to function as the information-recording apparatus and information-providing apparatus.
   According to the present invention, it is possible to receive information from not just one apparatus but from a plurality of apparatuses.
(23) The above object of the present invention is accomplished by a recording medium on which a program is recorded which is readable by a computer that is capable of accessing the information-providing apparatus via the network and causes the computer to function as the information-recording apparatus and wherein: an ID-information-acquisition device which acquires ID information that corresponds to a program information recorded on a recording medium; a protection-information -recognition device which recognizes whether or not the recording medium has protection information for copyright protection of the program information when recording the program information recorded on the recording medium to another recording medium; an ID-information-sending device which sends the ID-information to the information-providing apparatus via the network when protection information is recognized by the protection-information-recognition device; a corresponding-information-receiving device which receives corresponding information related to the program information and that is sent from the information-providing apparatus via the network according to the ID information; and an information-recording device which records the corresponding information that was received by the corresponding-information-receiving device on to the other recording medium instead of the program information.
   According to the present invention, ID information such as TOC information that corresponds to a program information such as music data is acquired from the a recording medium, and based on that information, it is possible to acquire corresponding information related to that program information from an information-providing apparatus such as a service server, so the user is able to record the corresponding information that is related to the program information onto another recording medium owned by the user even when the purchased CD (Compact Disc) is a CD having protection information for protecting the copyright of that program information.
(24) The above object of the present invention is accomplished by a recording medium on which a program is recorded which is readable by a computer that can provide information to an information-recording apparatus via a network and that the program causes the computer to function as an information-providing apparatus that an ID-information -receiving device that receives ID information that corresponds to a program information recorded on a recording medium and that is sent from the information-recording apparatus via the network; a corresponding-information -acquisition device which acquires corresponding information related to the program information based on the ID information; and a corresponding-information-sending device which sends the corresponding information to the information-recording apparatus via the network.
   According to the present invention, ID information such as TOC information that corresponds to program information such as music data is acquired from the a recording medium, and based on that information, it is possible to acquire corresponding information related to that program information from an information-providing apparatus such as a service server, so the user is able to record the corresponding information that is related to the program information onto another recording medium owned by the user.
(25) The above object of the present invention is accomplished by an information-providing method of an information providing system having an information-providing apparatus that provides information via a network, and an information-recording apparatus that can access the information-providing apparatus via the network, and where the information-recording apparatus comprises: an ID-information-acquisition process of acquiring ID information that corresponds to program information recorded on a recording medium; a protection-information-recognition process of recognizing whether or not the recording medium has protection information for copyright protection of the program information when recording the program information recorded on the recording medium to another recording medium; and an ID-information-sending process which sends the ID-information to the information-providing apparatus via the network when protection information is recognized by the protection-information-recognition device; and where the information-providing apparatus comprises: an ID-information-receiving process of receiving the ID information sent from the information-recording apparatus via the network; a corresponding-information-acquisition process of acquiring corresponding information based on the ID information; and a corresponding-information-sending process which sends the corresponding information to the information-recording apparatus via the network; and where the information-recording apparatus further comprises: a corresponding-information-receiving process of receiving corresponding information related to the program information and that is sent from the information-providing apparatus via the network according to the ID information; and an information-recording process of recording the corresponding information that was received by the corresponding -information-receiving device on to another recording medium.
   According to the present invention, ID information such as TOC information that corresponds to program information such as music data is acquired from the a recording medium, and based on that information, it is possible to acquire corresponding information related to that program information from an information-providing apparatus such as a service server, so the user is able to record the corresponding information that is related to the program information onto another recording medium owned by the user even when the purchased CD (Compact Disc) is a CD having protection information for protecting the copyright of that program information.

FIG. 1 is a block diagram showing the construction of an AV system for an automobile as an example of the information-providing system of a first embodiment of the invention;
FIG. 2 is a flowchart showing the processing of the control unit of the AV apparatus for an automobile of the first embodiment of the invention;
FIG. 3 is a flowchart showing the processing of the service server of the first embodiment of the invention.
FIG. 4 is a flowchart showing the processing of the control unit of a contents server of a first and second embodiment of the invention;
FIG. 5 is a block diagram showing the construction of an AV system S for an automobile as an example of the information-providing system of a second embodiment of the invention;
FIG. 6 is a flowchart showing the processing of the control unit of the AV apparatus for an automobile of the second embodiment of the invention; and
FIG. 7 is a flowchart showing the processing of the service server of the second embodiment of the invention.

### (Embodiment 1)

Next, the preferred embodiments of the present invention will be explained based on the drawings. The embodiments explained below are embodiments in which the invention is applied to an AV (Audio Visual) system for an automobile.

### [Construction and Function of an Automobile AV System]

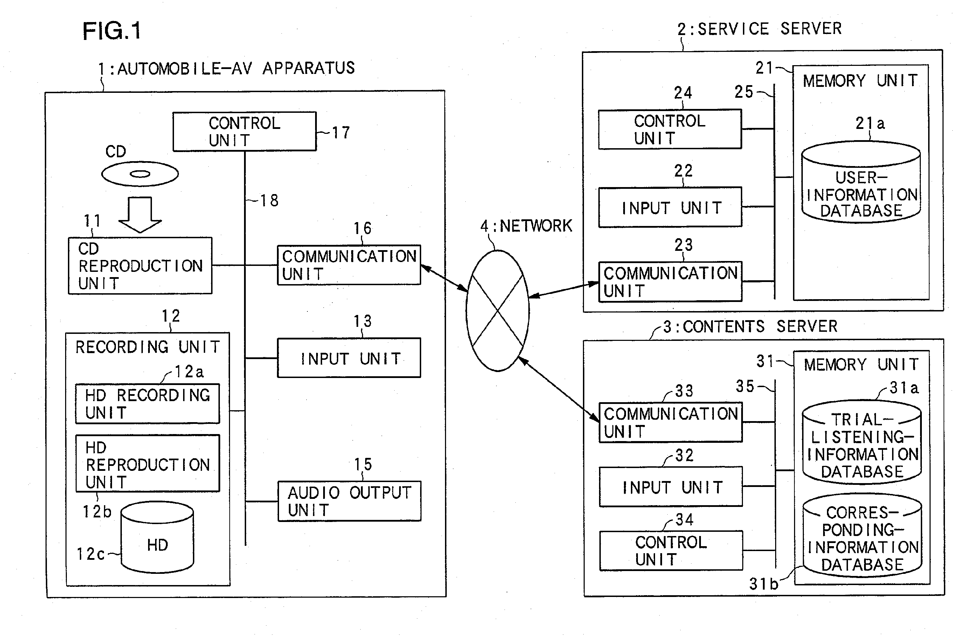

First, the construction and function of the AV system for an automobile of this embodiment will be explained with reference to FIG. 1. FIG. 1 is a block diagram showing the construction of an AV system S for an automobile as an example of the information-providing system of a first embodiment of the invention.

As shown in FIG. 1, the AV system for an automobile comprises: an automobile-AV apparatus 1 as an example of an information-recording/reproduction apparatus that contains the information-recording apparatus and information -reproduction apparatus of this invention; and a service server 2 and contents server 3 as an example of the information-providing apparatus of this invention. The service server and contents server 3 are connected together over a network 4. Also, the automobile-AV apparatus 1 can access the service server 2 and contents server 3 over the network 4. The network 4 can be a network such as an LAN, mobile communication network, the Internet, or the like. In actuality, there is a plurality of automobile-AV apparatuses 1 corresponding to the number of users.

### [Automobile-AV Apparatus]

First, the construction and function of the automobile-AV apparatus 1 will be explained.

The automobile-AV apparatus 1 is an apparatus that is mounted in the automobile, and as shown in FIG. 1, it comprises: a CD-reproduction unit 11 that reproduces information on a CD (Compact Disc) as one recording medium; a recording unit comprising, an HD (Hard Disk) 12c installed in the automobile-AV apparatus 1 as another recording medium, an HD-recording unit 12a, and an HD-reproduction unit 12b; an input unit 13 the includes a remote control unit and control buttons and the like; a display-control unit 14; audio-output unit 15; communication unit 16; and a control unit 17 that controls all of the components; and where all of the components are connected to each other by way of a bus 18.

The CD-reproduction unit 11 comprises: a mounting mechanism for mounting a CD (for example, a CD legally purchased by the user and owned by the user); a pick up that optically reads music data recorded on a CD; a spindle motor that drives and turns the CD; a servo circuit that performs servo control of the spindle motor and pick up; and a signal processing unit that performs processing such as a specified demodulation process on the music data (RF signal) as the program information that is read; and where under the control of the control unit 17, reproduces music data, and outputs it to the audio-output unit 15 via the bus 18.

Also, the CD-reproduction unit 11, under the control of the control unit 17, reads the TOC (Table of Contents) information that is recorded on the inner most part of the CD as an example of ID information, and outputs it to the control unit 17 via the bus 18. This TOC information contains the track number on the CD for each item of normal music data, the absolute time for the starting position and the ending position of each item of music data. Moreover, when recording music data from the CD to the HD 12c, the CD-reproduction unit comprises a protection-information-ID unit that determines whether or not there is copyright information in the CD program information (part of the music data or part of other data) that prevents output of the program information to the HD-recording unit 12a for copyright protection.

In this embodiment, determination is performed by the control unit 17 as the protection-information-IF device, and when the mounted CD is not a CCCD (Copy Controlled Compact Disc) that contains this copyright information (as will be described later, this is onlywhen there is a record instruction from the user), the CD-reproduction unit 11 outputs music data to the HD-recording unit 12a via the bus 18.

The HD-recording unit 12a comprises a buffer memory. When the control unit 17 determines in this way that the mounted CD mounted is not a CD (CCCD) that contains copyright information, the music data that is output from the CD-reproduction unit 11 as described above, under the control of the control unit 17 (only when there is a record instruction from the user, for example), is stored temporarily in the buffer memory via the bus 18, and then it is recorded on the HD 12c by the HD-recording unit 12a. Also, normally at this time, the TOC information is correlated with the music data and recorded on the HD12c. Furthermore, when it is desired to reproduce the music data, the HD-reproduction unit 12b reproduces the music data that is recorded on the HD 12c under the control of the control unit 17 and outputs it to the audio-output unit 15 via the bus 18.

In the other hand, when trying to record music data from the CD to the HD 12c and it is determined by the control unit 17 as a protection-information-ID device that the mounted CD is a CD (CCCD) that contains copyright information, the HD-recording unit 12a, under the control of the control unit 17 (only when there is a record instruction from the user, for example), records distributed music data onto the HD 12c as trial-listening information and corresponding information related to the music data (that will be described later) that is sent (provided) from the service server 2, and correlates the TOC information that is read from that CD with that trial-listening information and corresponding information in a specified memory area on the HD 12c.

The TOC information can also be stored in a non-volatile memory (for example, an EEPROM) that is separate from the HD12c. Moreover, when it is desired to reproduce the distributed music data that is distributed as the trial-listening information or corresponding information, the HD-reproduction unit 12b reproduces the trial-listening information and corresponding information that is recorded on the HD 12c under the control of the control unit 17, and after storing it temporarily in the buffer memory, outputs it to the audio-output unit 15 via the bus 18.

Information necessary for accessing the service server 2 and contents server 3 via the network 4 (for example, the addresses of the servers 2, 3 on the network), and the apparatus ID information for the automobile-AV apparatus 1 (unique for each automobile-AV apparatus) are stored on the HD 12c as user information.

The input unit 13 receives operating instructions from the user such as a record instruction by the user operating the remote controller or control buttons, and generates an operating signal that corresponds to that operation and outputs it to the control unit 17 via the bus 18.

The audio-output unit comprises a sound-processing unit that performs specified sound processing on the music data, a DAC (Digital-to-Analog Converter) that converts digital music data to an analog audio signal, an amplifier that amplifies the analog audio signal and speakers that convert the amplified analog signal to sound waves and output the sound. In this way, under the control of the control unit 17, the audio-output unit 15 outputs the music data that is output from the CD-reproduction unit 11, or the trial-listening or corresponding data that is output from the HD-reproduction unit 12b from the speakers as sound waves. The communication unit 16 performs data communication with the service server 2 or contents server 3 via the network 4, and when information (a signal) to be sent is input, it executes a preset output-interface process on the signal under the control of the control unit 17, and outputs that signal to the service server 2 or contents server 3 via the network 4. Moreover, under the control of the control unit 17, the communication unit 16 executes a preset input-interface process on information (signal) sent from the service server 2 or contents server 3 via the network 4 and outputs it to the control unit 17.

The control unit 17 comprises a CPU as a computer having a calculation function, a work RAM, a ROM for storing various kinds of processing programs and data (including the apparatus-ID information that will be described later) including the communication program, and an oscillation circuit; and when a control signal is received from the input unit 5, it generates control information for controlling all of the components based on the contents contained in that signal and outputs the information to the components via the bus 18. In this way, the control unit 17 controls all of the operations of the components of the automobile-AV apparatus 1.

That is, by executing the information-recording program stored in the ROM, the control unit 17 is able to control the components of the automobile-AV apparatus 1 to function as the ID-information-acquisition device, protection -information-ID device, ID-information-sending device, trial-information-receiving device, corresponding -information-receiving device, information-reproduction device, information-recording device, corresponding -information-request device, user-information-acquisition device and user-information-sending device of this invention.

More specifically, by functioning as an ID-information -acquisition device, the control unit 17 acquires TOC information corresponding to the music data recorded on the mounted CD from the CD-reproduction unit 11.

By functioning as a protection-information-ID device, the control unit 17 determines whether or not protection information for copyright protection is contained in the music data of the mounted CD.

Also, by functioning together with the communication unit 16 as an ID-information-sending device which acquires the trial-listening information and distributed music data or corresponding data related to the music data when there is an instruction from the user by way of the input unit 13 to record the music data recorded on the mounted CD to the HD 12c (so-called CD ripping) , and when the CD is a CD that contains protection information, the control unit 17 sends the TOC information to the service server 2 or contents server 3 via the network 4.

Also, by functioning together with the communication unit 16 as the corresponding-information-receiving device or trial-listening-information-receiving device, the control unit 17 receives the corresponding information or trial-listening information that is sent from the service server 2 via the network 4 according to the TOC information.

Also, by functioning together with the HD-reproduction unit 12b and audio-output unit 15 as the information-reproduction device, the control unit 17 outputs the distributed music data, which is the corresponding data, or the trial-listening information, from the speakers.

Moreover, by functioning together with the HD-recording unit 12a as the information-recording device, the control unit 17 correlates the corresponding information or trial-listening information with the TOC information and records it on a specified area of the HD 12c.

By recording the corresponding information on the HD 12c in this way, the same corresponding information does not have to be received again from the service server 2. In this case, when trying to record from the CD to the HD 12c (CD ripping), the control unit 17 determines whether or not corresponding information that corresponds to that TOC information is already recorded on the HD 12c, and when it is determined that it is recorded, it performs control so as not to send the TOC information. Also, by functioning together with the communication unit 16 as the corresponding-information-request device, the control unit 17 requests the service server 2 to send the distributed music data as corresponding information via the network 4 after checking the trial-listening information.

Moreover, by functioning as the user-information -acquisition device, the control unit 17 acquires the apparatus-ID information that is recording on the HD 12c and that is unique to the automobile-AV apparatus. Also, by functioning together with the communication unit 16 as the user-information-sending device, the control unit 17 sends the apparatus-ID information to the service server 2 via the network 4.

### [Service Server]

Next, the construction and operation of the service server 2, which is one part of the information-providing apparatus of this embodiment, will be explained.

The service server 2 is an apparatus that is set up by the information-providing business, and as shown in FIG. 1, it comprises a memory unit 21, input unit 22, communication. unit 23 and control unit 24, and all of the components are connected together by way of a bus 25.

The memory unit 21 comprises an HD (Hard Disc) or the like, and here, as shown in the figure, a database 21a is created for the user information.

User information for automobile-AV apparatuses 1 is recorded (stored) in the user-information database 21a for each user. The user information contains apparatus-ID information (unique for each automobile-AV apparatus 1) and an access log from the automobile-AV apparatus 1. The access log contains the access date and time, and information for specifying the corresponding information (distributed music data) that is sent from the automobile-AV apparatus 1 that is being accessed. In other words, with this information it is possible to know how many times corresponding information related to certain music data on a certain CD is accessed by the automobile-AV apparatus 1. The apparatus-ID information could be recorded by the operator who purchased the automobile-AV apparatus 1 by using the input unit 22, or could be automatically registered when the automobile-AV apparatus 1 accesses the service server 2 for the first time.

In the former case, the input unit 22 comprises a keyboard, a mouse and the like, and when the operator uses them, the input unit 22 receives the operating instruction from the operator and generates an operation signal that corresponds to that operation; and in the latter case, apparatus-ID information that is sent fro the automobile-AV apparatus 1 is input as a signal and is output by way of the bus 25 to the control unit 24.

The communication unit 23 performs data communication with the automobile-AV apparatus 1 or the contents server 3 via the network 4.

The control unit 24 comprises a CPU as a computer that has a calculation function, a work RAM, a ROM for stored various processing programs and data, including a communication-process program, and an oscillation circuit; and when a signal is received from the input unit 22 or communication unit 23, it generates control information for controlling each of the components based on the contents of the signal and outputs the information to the components via the bus 25. In this way, the control unit 24 performs overall control of each of the components of the service server 2.

Moreover, by executing the information-providing program that is stored in ROM, the control unit 24 controls each of the components to function as the ID-information-receiving device, corresponding-information-acquisition device, trial-listening-information-acquisition device, trial -listening-information-sending device, corresponding -information-sending device and user-information-receiving device of this invention.

More specifically, by functioning together with the communication unit 23 as the ID-information-receiving device, the control unit 24 receives the TOC information sent from the automobile-AV apparatus 1 via the network 4.

Also, by functioning as the trial-listening-acquisition device and corresponding-information-acquisition device, the control unit 24 sends that TOC information to the contents server (described later) via the network 4, and acquires the trial-listening information and corresponding information from the contents server 3.

Moreover, by functioning together with the communication unit 23 as the trial-listening-information-sending device and corresponding-information-sending device, the control unit 24 sends the trial-listening information and corresponding information to the automobile-AV apparatus 1 via the network 4.

Also, by function together with the communication unit 23 as the user-information-receiving device, the control unit 24 receives the apparatus-ID information sent from the automobile-AV apparatus 1 via the network 4.

The information-providing program can be downloaded from a specified server that is connected to the network 4.

### [Contents Server]

Next, the construction and function of the contents server 3 will be explained.

As shown in FIG. 1, the contents server3 comprises a memory unit 31, input unit 32, communication unit 33 and control unit 34, and all of the components are connected together by way of a bus 35.

The memory unit 31 comprises an HD (Hard Disc), and as shown in the figure, a database 31a for trial-listening information, and a database 31b for corresponding information are created.

The database 31a for trial-listening information and the database 31b for corresponding information are both for searching for corresponding information or trial-listening information that is related to the music data from the TOC information, and the same distributed music information is registered (stored) in them as trial-listening information or corresponding information as the music data that corresponds to the TOC information. The trial-listening information that is registered in this trial-listening-information database 31a is part of the music data, and as an example, it is information such as the beginning part (introduction) of the music data or a specified portion of the music (such as the so-called song's climax).

Moreover, the trial-listening information and corresponding information are registered in the trial-listening database 31a and corresponding-information database 31b by way of the input unit 32 by the operator or from another database (not shown in figure) when the a new CD is sold.

The control unit 34 comprises: a CPU as a computer having a calculation function; work RAM; ROM for storing various processing programs and data, including the communication-processing program; and an oscillation circuit; and when it receives a signal from the input unit 32, it generates control information for controlling each of the components based on the contents contained in the signal and outputs that information to the components by way of the bus 35. In this way, the control unit 34 performs overall control of the operation of all of the components of the contents server 3.

Also, when the control unit 34 receives the TOC information that is sent from the service server 2 via the network 4 and communication unit 33, it searches the trial-listening database 31a and corresponding-information database 31b and acquires corresponding information and trial-listening information related to the music data corresponding to that TOC information and sends (returns) it to the service server 2.

It is also possible for the service server 2 to receive the TOC information directly from the automobile-AV apparatus 1 via the network 4. In this case, the control unit 34 acquires trial-listening information and corresponding information related to the music data corresponding to the TOC information from the automobile-AV apparatus 1 and sends it to the service server 2.

The function of the input unit 32 and communication unit 33 is the same as the function of the input unit 22 and communication unit 23.

### [Operation of the Automobile-AV System]

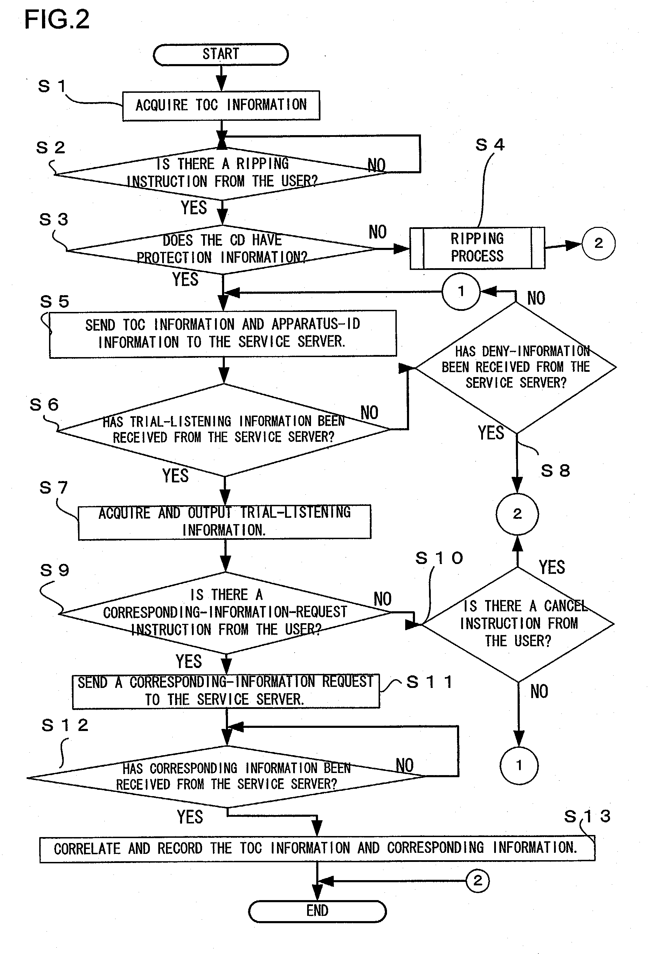

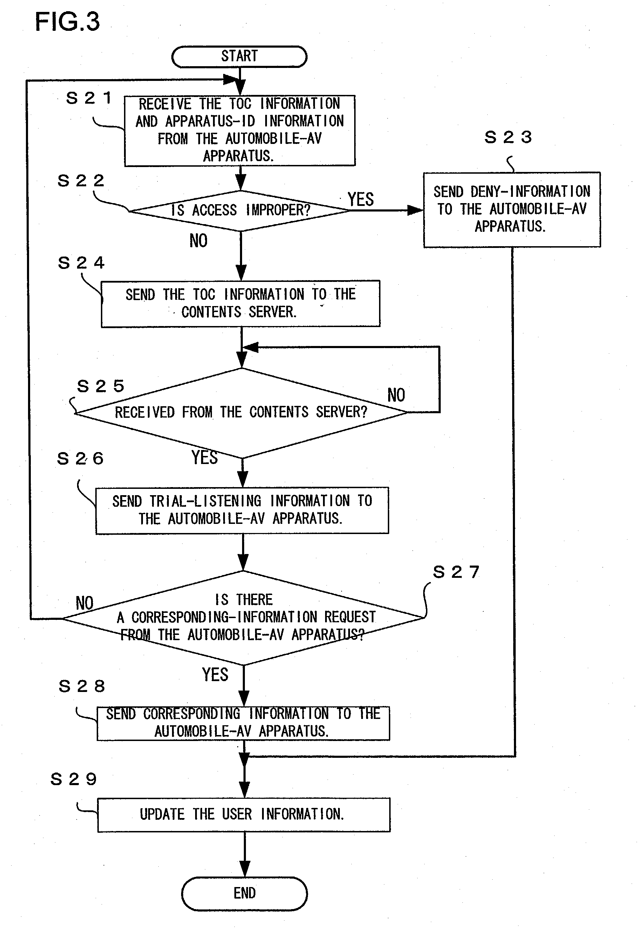

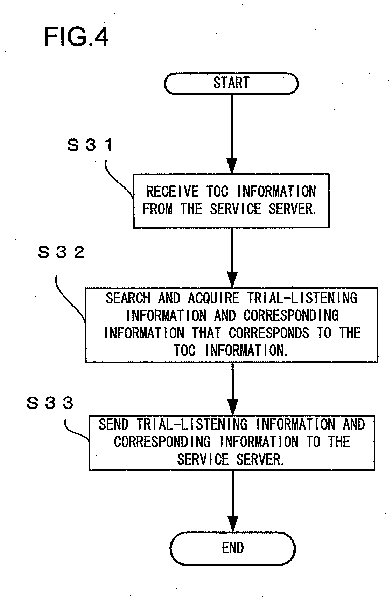

Next, FIG. 1 to FIG. 4 will be used to explain to explain the operation of the automobile-AV system S. FIG. 2 and FIG. 4 are drawings showing the processing when using the automobile-AV apparatus 1 to record from the CD to the HD 12c (so-called CD ripping), and more specifically, FIG. 2 is a flowchart showing the processing by the control unit 17 of the automobile-AV apparatus 1, FIG. 3 is a flowchart showing the processing by the control unit 24 of the service server 2 and FIG. 4 is a flowchart showing the processing by the control unit 34 of the contents server 3.

First, FIG. 2 will be used to explain the processing of the automobile-AV apparatus 1. The processing shown in FIG. 2 is performed by the control unit 17 executing the information-recording program.

In the processing of FIG. 2, after the user mounts a CD owned by the user in the CD-reproduction unit 11 that is brought and put into the automobile, the control unit 17 of the automobile-AV apparatus 1 acquires the TOC information that is read from the inner-most part of that CD by the CD-reproduction unit 11 and records it in the work RAM, for example (step S1).

Next, when the user operates the control buttons located on the input unit 13 and inputs an operating instruction to record from the CD to the HD 12c, or to perform so-called CD ripping, the control unit 17 recognizes that (step S2: YES), and determines whether or not the mounted CD is a CD having protection information for protecting the copyright of the music data (step S3). On the other hand, when there is no operating instruction to perform CD ripping (step S2: NO), the process returns to the judgment process of step S2.

When the result of the judgment in step S3 is that the mounted CD is not a CD having protection information (step S3: NO), the normal CD ripping process is performed. More specifically, a reproduction instruction to reproduce the music data is given to the CD-reproduction unit 11, and a recording instruction to record the music data is given to the HD-recording unit 12a. By doing this, the CD-reproduction unit 11 prepares for reproduction and moves to the reproduction operation, and the HD-recording unit 12a prepares which records and moves to the recording operation (in this way, normal CD ripping operation is performed at the same time as CD reproduction). When music data is recorded to the HD 12c, the TOC information is also correlated with that music data and recorded.

On the other hand, when the result of the judgment in step 3 is that the mounted CD is a CD having protection information (step S3: YES), the control unit 17, by way of the communication unit 16, establishes communication with the service server 2 via the network 4, and sends the acquired TOC information together with the apparatus-ID information recorded in the HD 12c to the service server 2 via network 4 (step S5). The processing by the service server 2 after receiving that TOC information is explained later.

The control unit 17 can also establish communication with the contents server 3 via network 4 and send the TOC information to the contents server 3. In this case, it is also possible for the control unit 17 to send only the apparatus-ID information to the service server 2.

Next, when the automobile-AV apparatus 1 received the trial-listening information that was sent from the service server 2 according to the TOC information via network 4 (step S6: YES), the control unit 17, by way of the HD-recording unit, records the trial-listening information on to the HD 12c, and then by way of the HD-reproduction unit 12b and the audio-output unit 15, reproduces and outputs that trial-listening information (step S7).

On the other hand, when trial-listening information is not received from the service server 2 (step S6: NO), the control unit 17 determines whether or not deny-information is received from the service server 2, and when deny-information is received, the control unit 17, by way of the communication unit 16, cuts off communication with the service server 2 and ends all processing (step S8: YES), however when deny-information is also not received (step S8: NO), the control unit 17 moves to step S5 and resends the TOC information together with the apparatus-ID information to the service server 2 via network 4. This is done in order to try sending the TOC information and apparatus-ID information again in case, due to some communication trouble with the service server 2, the TOC information and the apparatus-ID information were not properly sent to the service server 2. In this case, this process is set beforehand by control of the control unit 17 to be repeated a set number of times.

Moreover, after the trial-listening information is output according to the processing of step S7, the control unit 17 prompts the user to determine whether or not to request corresponding information (distributed music data) related to the trial-listening information by operating the control buttons located on the input unit 13 (step S9), and when there is an instruction to request corresponding information (step S9: YES), it sends the corresponding-information request to the service server 2 (step S11).

On the other hand, when there is no instruction to request corresponding information (step S9: NO), the control unit 17 prompts the user to determine whether or not to cancel all recording operations (CD ripping) to the HD12c by operating the control buttons located on the input unit 13 (step S10), and when there is a cancel instruction, the control unit 17, by way of the communication 16, cuts off communication with the service server 2 and ends all processing (step S10: YES). This is because after the user checked the music data using the trial-listening information, the user canceled receiving the corresponding information.

On the other hand, when there is no cancel instruction from the user in step S10 (step S10: NO), the control unit returns to step S5.

This is done in order to try sending the TOC information and apparatus-ID information again when, due to some kind of communication trouble with the service server 2, the instruction whether or not to request corresponding information is not sent to the service server 2, or before that, the TOC information and apparatus-ID information are not sent to the service server 2. This process is set beforehand by control of the control unit 17 to be repeated a set number of times.

Also, in step S11, when the corresponding-information -request instruction is sent to the service server 2, the automobile-AV apparatus 1 repeats the judgment process of step S12 until the corresponding information sent from the service server 2 is received via the network 4 (step S12: NO), and when the corresponding information is received (step S12: YES), the control unit 17 correlates the TOC information with the corresponding information and, by way of the HD-recording unit 12a, records them on the HD 12c (step S13). After that, by way of the communication unit 16, it cuts off communication with the service server 2 and ends all processing.

In this way, it is possible for the user to record corresponding information (distributed music data) on to the user's own HD 12c via the network, even though it is not possible to perform CD ripping to the HD 12c because the user's CD is a CD having protection information for protecting the copyright of the music data.

Next, FIG. 3 and FIG. 4 will be used to explain the processing by the service server 2 and contents server 3. The processing shown in FIG. 3 is performed by executing the information-providing program by the control unit 24. In the processing shown in FIG. 3, when the control unit 24 of the service server 2 receives the TOC information and apparatus-ID information sent from the automobile-AV apparatus 1 via the network 4 (step S21), the control unit 24 searches the user-information database 21a, and checks the date and time of access from the automobile-AV apparatus that corresponds to the received apparatus-ID information, and checks the information for specifying the trial-listening information and corresponding information sent to that automobile-AV apparatus 1 to determine whether or not the access may be improper access (step S22).

Improper access referred to here could be, when in order to prevent improper copying, the number of times the trial-listening information and corresponding information can be downloaded is set as a specified number of times (number of times distribution is possible), and when there is an attempt to download the trial-listening information and corresponding information is more than this specified number of times.

Here, when it is determined that the access is improper access (step S22: YES), deny-information is sent to the automobile-AV apparatus 1 (step S23), and the user information corresponding to the received apparatus-ID information is updated and processing ends (step S29). This update of the user information is a process of adding the date and time of access from the automobile-AV apparatus 1 to that user information. By doing this, it is possible to always know from the latest information how many times the user has requested corresponding information.

On the other hand, when the access is not improper access (step S22: NO) , the control unit 24, byway of the communication unit 23, establishes communication with the contents server 3 via the network 4, and sends the TOC information to the contents server 3 via the network 4 (step S24).

Also, in the processing shown in FIG. 4, when the control unit 34 of the contents server 3 receives the sent TOC information via the network 4 (step S31), the control unit 34 searches the trial-listening database 31a and corresponding-information database 31b and acquires the distribution music data as trial-listening information and corresponding information that is related to the music data corresponding to the TOC information (step S32), and sends (returns) it to the service server 2 (step S33). The processing of steps S32 and s33 is executed even when the TOC information is received directly from the automobile-AV apparatus 1 via the network 4.

Moreover, returning to the processing shown in FIG. 3, the control unit 24 of the service server 2 repeats the judgment process of step S25 until the trial-listening information and corresponding information corresponding to the TOC information is received from the contents server 3 via the network 4 (step S25: NO), and when the trial-listening information and corresponding information is received (step S25: YES), the control unit 24, by way of the communication unit 23, sends that trial-listening information to the automobile-AV apparatus 1 (step S26). Next, after the control unit 24 receives a corresponding-information request from the automobile-AV apparatus 1 (step S27: YES), it sends the corresponding information to the automobile-AV apparatus 1 by way of the communication unit 23 (step S28). On the other hand, when a corresponding-information request is not received from the automobile-AV apparatus 1, the control unit returns to step S21. This is done in order to try receiving the TOC information again when communication was not possible due to some kind of communication trouble with the automobile-AV apparatus 1. In this case, this process is set beforehand by control of the control unit 17 to be repeated only a set number of times (this is the same as step S8: NO and step S10: NO in FIG. 2).

Also, the control unit 24 searches the user-information database 21a and updates the user information corresponding to the received apparatus-ID information, then ends processing (step S29). This update of the user information is performed by adding the date and time of access from the automobile-AV apparatus 1 and the information for specifying the trial-listening information and corresponding information sent to that automobile-AV apparatus 1 to that user information. That is, this process updates the number of times of access by the user, or more specifically, updates the number of times corresponding information that corresponds to the music data of one CD is downloaded via the network 4. In this way, the control unit 24 is able to check in step S22 described above whether downloading has been performed over several times when there is a chance of improper access.

As explained above, in this embodiment, recording on to the HD 12c was made possible by acquiring TOC information corresponding to the music data is acquired from the CD, and then based on it, acquiring corresponding information related to that music data from the service server 2, so it is possible for the user to record the music data from a CD purchased by the user to another medium of the user's such as a HD 12c (instead of CD ripping), even when the CD is a CD having protection information that protects the copyright of the music data.

Also, by having a user-information database 21a in the service server 2 to manage the user information, it is possible to know the number of times there was access from one automobile-AV apparatus 1, and it is possible to prevent improper access by not sending corresponding information when there is access several times from the same apparatus.

In this embodiment, TOC information was used as one example of the ID information of this invention, however, it is not limited to this, and in the case that there is copyright protection for the TOC information itself, other information which is readable from the CD and that can identify that CD can be used, and in that case, the automobile-AV apparatus 1 can acquire that information for identifying the CD as ID information instead of the TOC information, and send it to the service server 2 via the network 4. In that case, by further having a music-information database that stores music information comprising the same information that is contained in the TOC information of the CD that corresponds to the ID information in the memory unit 31 of the service server 2, it is possible to provide not only corresponding information but this music information as well, even in the case when the TOC information of the CD mounted in the automobile-AV apparatus 1 is copyright protected and it is not possible to record the TOC information of that CD on the HD 12c.

Moreover, in the operating process of the automobile-AV apparatus 1, when the music data of the mounted CD or corresponding information (distributed music data) similar to it is recorded on the HD 12c, the control unit 17 can perform control such as to not to send the TOC information. By doing this, it is possible to prevent performing the operation of acquiring corresponding information again when the corresponding information has already been downloaded and stored on the HD 12c.

Also, in this embodiment, the trial-listening information and corresponding information were correlated with the TOC information and recorded on the HD 12c, however, the invention is not limited to this, and in the case where corresponding information is received, it is possible to improve the efficiency of the memory space of the HD 12c by deleting the trial-listening information from the HD 12c and correlating just the corresponding information with the TOC information.

Moreover, in this embodiment, a CD-reproduction unit 11 was used as an example of the information-reproduction unit, however the invention is not limited to this, and it is possible to use a DVD-reproduction unit that reproduces music and video data that are recorded on a DVD (Digital Versatile Disc), or a MD-reproduction unit that reproduces music data recorded on a MD (Mini Disc), or even a combination of these.

Also, in this embodiment, a HD-recording unit and HD-reproduction unit 12b were used as an example, however, the invention is not limited to these, and it is also possible to use, for example, a CD-R recording unit and CD-R reproduction unit that record and reproduce music data on a CD-R, or a DVD-R/W recording unit and DVD-R/W unit that record and reproduce music data on a DVD-R/W, or even a combination of these.

Also, in this embodiment, user information was registered in the user-information database 21a as ID information unique to the automobile-AV apparatus 1, however, as other examples, it is possible to record the information entered on the user-registration form when purchasing the CD (name, telephone number, e-mail address, or the like that were entered when the user purchased the CD) on part of the CD as user information, and register (store in memory) the same information or corresponding user information in the user-information database 21a of the service server 2. At that time, the TOC information and user information of the purchaser of the CD is acquired under the control of the control unit 17 of the automobile-AV apparatus 1 and sent to the service server 2 via the network 4. Also, by comparing the user information received from the automobile-AV apparatus 1 with the user information registered in the user-information database 21a under the control of the control unit 24 of the service server 2, it is possible to know how many times the user who owns a CD accessed the corresponding information related to the music data of that CD.

Moreover, in this embodiment, recording the music data as trial-listening information and corresponding information as is on the HD 12c in the same way as the program information recorded on the CD was explained as a premise, however, it is also possible to compress the trial-listening information and corresponding information using a format such as MP3, ATRAC3 or the like, or to encode the trial-listening information and corresponding information for copyright protection before recording it onto the HD 12c.

Also, in this embodiment, an automobile-AV apparatus was used as the information-recording apparatus and information-reproduction apparatus of this invention, however, the invention is not limited to this, and it is possible, for example, to use a home-AV apparatus, automobile-navigation apparatus, personal computer (PC) or the like.

In this embodiment, the hardware of the service server 2 and contents server 3 as an example of the information-providing apparatus of this invention were separate, however, it is possible to use a single server that integrates the function of the service server 2 and contents server 3, or to set up a plurality of contents servers 3 when the service server 2 and contents server 3 are separate.

### (Embodiment 2)

Next, a second embodiment of the invention will be explained based on the drawings. In addition to the construction of the first embodiment described above, this second embodiment further receives the cost when the corresponding information is received. The other construction and forms of this embodiment can be changed according to first embodiment.

### [Construction and Function of the Automobile-AV System]

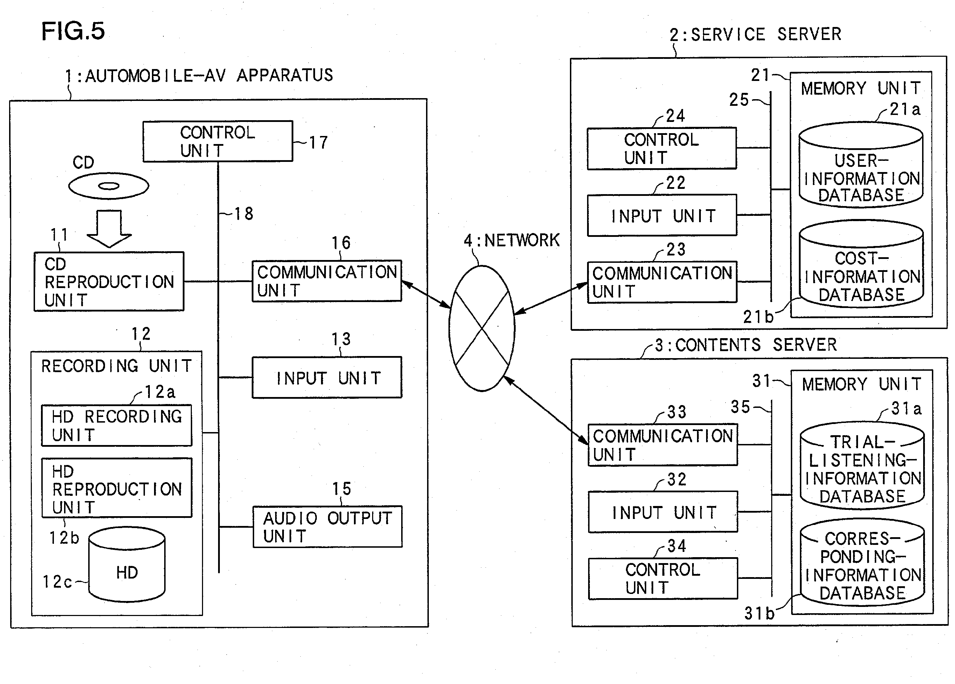

The construction and function of the automobile-AV system S of this second embodiment will be explained using FIG. 5.

As shown in FIG. 5, the memory unit 21 of the service server 2 comprises a user-information database 21a and cost-information database 21b.

The method of payment that was entered by the user when purchasing the apparatus, such as a credit card number or bank account number, is further registered (stored) in this user-information database 21a for each user. That is, information for billing the cost of the corresponding information is registered as user information for the automobile-AV apparatus 1 that requests corresponding information from the service server 2.

Also, in the case of providing corresponding information that corresponds to the music data on the CD from the service server 2 to the automobile-AV apparatus 1, the cost information that will be the base for calculating the cost (download fee (cost) of the corresponding information) is registered (stored) in the cost-information database 21b. For example, even in the case of information indicating that no charge is requested for just the first issue CD (when the corresponding information is sent for free), or when downloading corresponding information from the user's own CD, the user-information database 21a is searched under the control of the control unit 24 to determine whether or not the download is greater than a preset number of times (for example greater than 10 times), and information such as, information for charging a fee using a pre-determined calculation method, the cost set for each music data, or discount information that is applied when a problem occurs in recording to the HD 12c due to protection information such as copyright information, is registered.

Moreover, the control unit 17 in the automobile-AV apparatus 1 makes the components of the automobile-AV apparatus 1 function further as a cost-information-receiving device and cost-information-supply device, and the control unit 24 in the service server 2 makes the components of the service server 2 function further as a cost-information -acquisition device, cost-information-sending device and user-information-management device.

Furthermore, by functioning together with the communication device as the cost-information-receiving device, when the control unit 17 accesses the service server 2 to acquire corresponding information, it also receives the cost information the corresponds to that corresponding information from the service server 2.

Also, the control unit 17 further functions as the cost-information-supply device, and supplies that cost information to the user by displaying the cost information received from the service server 2 on a display unit (not shown in the figure) in the apparatus, outputting the information as an audio message from the audio-output unit, etc.

Moreover, by functioning as the cost-information -acquisition device, the control unit 24 searches the cost-information database 21b and acquires the cost information.

Also, by functioning together with the communication unit 23 as the cost-information-sending device, the control unit 24 sends the acquired cost information to the automobile-AV apparatus 1.

Furthermore, by functioning as the user-information -management device, the control unit 24 manages the user information, which was received from the automobile-AV apparatus 1 by way of the communication unit 23, using the user-information database 21a, and each time there is apparatus-ID information sent from an automobile-AV apparatus 1, it compares that information with the registered user information and updates the number of times there was access from that user, billing information and the like, and according to that, as the cost-information-acquisition uses the cost-information database 21b to set the cost. The billing information can be input and registered in the database by the operator when checking the billing, or can be registered automatically when the account-settlement device registered in the user-information database is an electronic account using electronic money and when a bill is recognized by insufficient account balance.

The other construction and functions of the automobile-AV system S are the same as those of the first embodiment described above, so a detail explanation will be omitted.

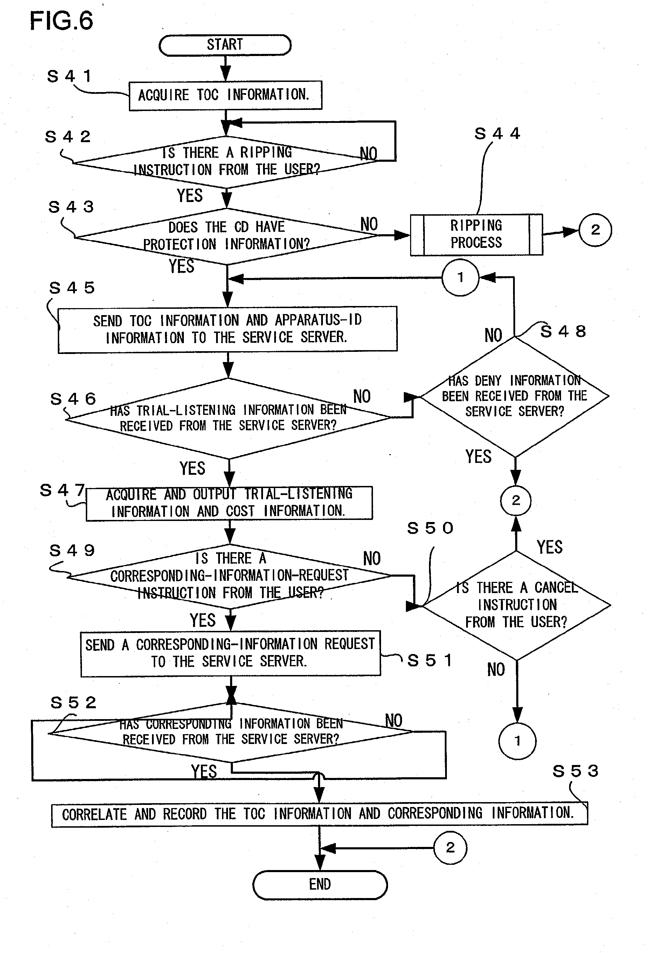

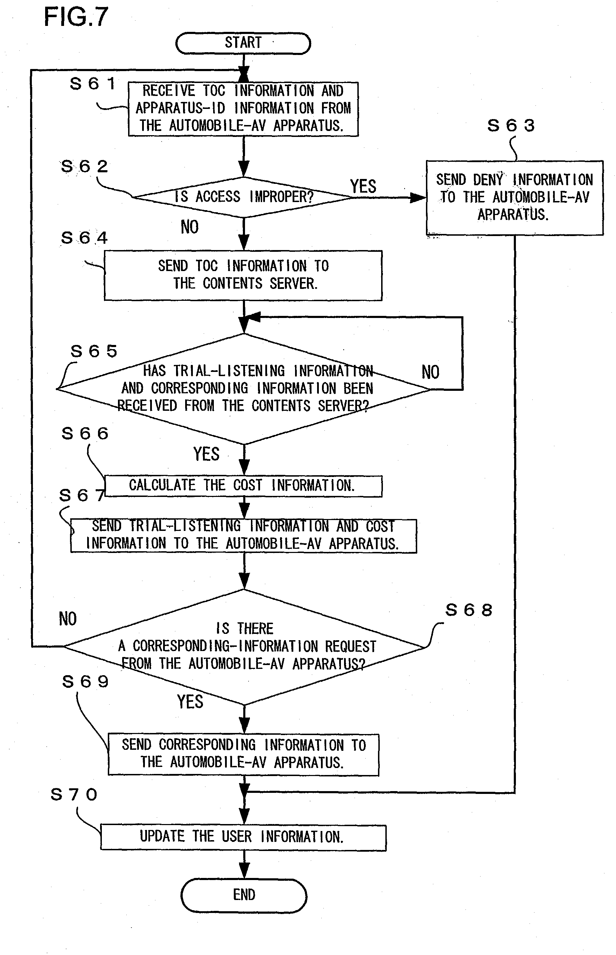

Next, FIG. 4 to FIG. 7 will be used to explain the operation of the automobile-AV system S. FIG. 6 and FIG. 7 show the processing when using the automobile-AV apparatus 1 to record from the CD to the HD 12c (so-called CD ripping), and more specifically, FIG. 6 is a flowchart showing the processing by the control unit 17 of the automobile-AV apparatus 1, and FIG. 7 is a flowchart showing the processing by the control unit 24 of the service server 2. FIG. 4 is a flowchart showing the processing by the control unit 34 of the contents server 3, and is the same operation as in the first embodiment.

First, FIG. 6 will be used to explain the processing of the automobile-AV apparatus 1. The process shown in FIG. 6 is performed by the control unit 17 executing the information-recording program.

In the process shown in FIG. 6, when a CD owned by the user, for example, is mounted in the CD-reproduction unit 11 that was brought into the automobile, the control unit 17 of the automobile-AV apparatus 1 acquires the TOC information that is read from the inner-most part of the CD by the CD-reproduction unit 11, and stores it in the work RAM, for example (step S41).

Next, when the user operates the control buttons located on the input unit 13 and inputs an operating instruction to record from the CD to the HD 12c, so-called CD ripping, the control unit 17 recognizedthis (step S42: YES) , and determines whether or not the mounted CD is a CD having protection information for protecting the copyright of the music data (step S43). On the other hand, when there is no instruction to perform CD ripping (step S42: NO), the control unit 17 repeats to the judgment process of step S42.

When the result of the judgment in step S43 indicates that the mounted CD does not have protection information (step S43: NO), the normal CD-ripping process is performed. However, when the result of the judgment in step S43 indicates that the mounted CD does have protection information (step S43: YES), the control unit 17, by way of the communication unit 23, establishes communication with the service server 2 via the network 4, and sends the acquired TOC information together with the apparatus-ID information recorded on the HD 12c to the service server 2 via the network 4 (step S45). The processing by the service server 2 that receives this TOC information will be described later.

Next, when the automobile-AV apparatus 1 receives the trial-listening information and cost information that corresponds to the TOC information from the service server 2 via the network 4 (step S46: YES), the control unit 17, by way of the HD-recording unit 12a, records the trial-listening information on the HD 12c, and by way of the HD-reproduction unit 12b and audio-output unit 15, reproduces and outputs that trial listening information, and displays and outputs the cost information on the display unit or the like of the apparatus (not shown in the figure) (step S47).

On the other hand, when the trial-listening information and cost information have not been received from the service server 2 (step S46: NO), the control unit 17 determines whether or not deny-information was received from service server, and when deny-information was received, the control unit 17, by way of the communication unit 16, cut off communication with the service server 2 and ends all processing (step S48: YES), however, when deny-information was not received (step S48: NO), the control unit 17 advances to step S45, and sends the TOC information and apparatus-ID information to the service server 2 again via the network 4. This is done in order to try sending the TOC information and apparatus-ID information again, in case the TOC information and apparatus-ID information were not properly sent to the service server 2 due to some kind of communication trouble with the service server 2. In this case, the number of time to repeat the operation is set in advance by control from the control unit 17.

Also, after the trial-listening information and cost information have been output by the processing in step S47, the control unit 17 prompts the user to operate the control buttons on the input unit 13 to decide and input whether or not to request corresponding information (distributed music data) that corresponds to the trial-listening information (step S49), and when there is an instruction to request corresponding information (step S49: YES), the control unit 17 sends the corresponding-information request to the service server 2 (step S51).

On the other hand, when there is no request for corresponding information (step S49: NO), the control unit 17 prompts the user to operate the control buttons on the input unit 13 to decide whether or not to cancel all recording operations (CD ripping) to the HD 12c (step S50), and when there is a cancel instruction, the control unit 17, by way of the communication unit 16, cuts off communication with the service server 2 and ends all processing (step S50: YES). This is done because receiving the corresponding information related to the music data may be canceled after the user checks the trial-listening information or cost information.

On the other hand, when there is no cancel instruction from the user in step S50 (step S50: NO), the control unit 17 returns to step S45. This is done in order to try to send TOC information and apparatus-ID information again when the instruction whether or not to request corresponding information was not sent to the service server 2, or when even before that, the TOC information and apparatus-ID information were not sent to the service server 2 due to some kind of communication trouble with the service server 2. Here, the number of times the process is repeated is set beforehand by control from the control unit 17.

Also, in step S51, when a corresponding-information -request instruction is sent to the service server 2, the automobile-AV apparatus 1 repeats the judgment process of step S52 until it receives the corresponding information sent from the service server 2 via the network 4 (step S52: NO), and when the corresponding information is received (step S52: YES), the control unit 17 correlates the TOC information with the corresponding information and, by way of the HD recording unit 12a, records them on the HD 12c (step S53).

After that, byway of the communication unit 16, the control unit 17 cuts of communication with the service server 2 and ends all processing.

In this way, the user is able to record corresponding information (distributed music data) on to the HD 12c via the network even when it is not possible to perform CD ripping to the user's own HD 12c because the user's CD is a CD having protection information for copyright protection of the music data on the CD.

At this time, it is also possible for the user to use the cost information to check the price (cost) of acquiring corresponding information, and to decide whether or not to acquire that corresponding information before actually acquiring the corresponding information.

Next, the processing by the service server 2 and contents server 3 will be explained with reference to FIG. 7 and FIG. 4. The processing shown in FIG. 7 is performed by the control unit 24 executing the information-providing program.

In the processing shown in FIG. 7, when the control unit 24 of the service server 2 receives TOC information and apparatus-ID information that was sent from the automobile-AV apparatus 1 via the network 4 (step S61), the control unit 24 searches the user-information database 21a and checks information that gives the access dates and times for the automobile-AV apparatus that corresponds to the received apparatus-ID information and checks information that indicates what trial-listening information and corresponding information have been sent to that automobile-AV apparatus 1, and then determines whether or not the access is improper access that exceeds the preset number of times access is allowed, and determines whether or not the user pays the cost on time (step S62). At this time, when it is determined that access is improper access (step S62: YES), the control unit 24 sends deny-information to the automobile-AV apparatus 1 (step S63), then updates the received user information and ends processing (step S70). This update of user information is a process of adding the access date and time information for the access from the automobile-AV apparatus 1 to the user information of that user. By doing this, the control unit 24 is able to always know the latest information for how many times the user has requested corresponding information.

On the other hand, when the access is not improper access (step S62: NO), the control unit 24, byway of the communication unit 23, establishes communication with the contents server 3 via the network 4, and sends the TOC information to the contents server 3 via the network 4 (step S64).

Also, in the processing shown in FIG. 4, when the control unit 34 of the contents server 3 receives the TOC information that was sent from the service server 2 via the network 4 (step S31), the control unit 34 searches the trial-listening -information database 31a and corresponding-information database 31b and acquires distribution music data as the trial-listening information and corresponding information related to the music data corresponding to the TOC information (step S32), and sends (returns) it to the service server 2 (step S33).

Also, returning to the processing shown in FIG. 7, the control unit 24 of the service server 2 repeats the judgment process of step S65 until it receives the trial-listening information and corresponding information that correspond to the TOC information from the contents server 3 via the network 4 (step S65: NO), and when it receives the trial-listening information and corresponding information (step S65: YES), the control unit 24 searches the user-information database 21a and the cost-information database 21b, and calculates the cost information (step S66).

Moreover, the control unit 24, by way of the communication unit 23, sends the trial-listening information and corresponding information to the automobile-AV apparatus 1 (step S67).

Next, when the control unit 24 receives a corresponding -information request from the automobile-AV apparatus 1 (step S68: YES), by way of the communication unit 23, it sends the corresponding information to the automobile-AV apparatus 1 (step S69). However, when no corresponding-information request is received from the automobile-AV apparatus 1, the control unit 24 returns to step S61. This is done in order to try receiving the TOC information again when communication was not possible due to some kind of communication trouble with the automobile-AV apparatus 1. In this case, the number of times the process is repeated is set beforehand by control from the control unit 24 (this is the same as step S48: NO, and step S50: NO shown in FIG. 6).

Also, the control unit 24 searches the user-information database 21a and updates the received user information, then ends processing (step S70). The update of this user information is performed by adding information for indicating the access date and time of the access from the automobile-AV apparatus 1 and information for indicating what trial-listening information and corresponding information was sent to that automobile-AV apparatus 1 to the user information for that user. In other words, it updates the number of times there was access from the user, and more specifically, updates the number of times corresponding information that corresponds to the music data of a CD has been downloaded via the network. In this way, in the processing of step S62, the control unit 24 is able to know when downloading has been performed many times and may be improper.

In this way, the user is able to record to another recording medium such as the HD 12c owned by the user, even when the user's CD is a CD having protection information for copyright protection of the music data on that CD.

At this time, it is also possible for the user to use the cost information to check the price (cost) of acquiring corresponding information, and to decide whether or not to acquire that corresponding information before actually acquiring the corresponding information.

The cost-information database 21b described above could also be located in the contents server 3. In this case, the cost is billed when sending corresponding information from the contents server 3 to the service server 2.

Also, receiving the cost information can be performed automatically by electronic money via the network 4, or the bill can be sent at a later date to the user's address that is registered as user information.

Moreover, in the first and second embodiments described above, examples were given in which after copyright information that prevents the output of the program information was recognized as the protection information for copyright protection, the trial-listening information and corresponding information were downloaded and acquired via the network 4 from the service server 2 and contents server 3, which are the information-providing apparatuses, however, besides this, there are various forms of protection information, such as deliberately inserting error information beforehand into part of the ID information (TOC) or program information (music data) as protection information, and in the case of these, the protection-information-recognition unit can recognize the existence of protection information by detecting defects such as errors or sound jumps that occur when recording from the CD to the HD 12c.

Furthermore, by using construction in which the protection-information-recognition unit recognizes the existence of protection information by detecting defects such as error or sound jumps, it is possible to download and acquire trial-listening information and corresponding information from the service server 2 and contents server 3, which are the information-providing apparatuses, instead of program information that cannot be recorded on the HD 12c, even when there are scratches or defects on the CD itself, or when the program information recorded on the CD is damaged.

Also, in the first and second embodiments described above, preferred examples were given in which by acquiring trial-listening information before acquiring the corresponding information, a chance was provided to the user to listen to the trial-listening information and to select whether or not to acquire the corresponding information, such that user does not acquire unwanted corresponding information, however, the invention is not limited to this, and of course construction in which corresponding information is automatically acquired without acquiring trial-listening information when there is a recording instruction to record from one recording medium (CD or the like) to another recording medium (HD 12c or the like) is also possible.

## Claims

1. An information-providing system having an information-providing apparatus (2) that provides information over a network (4) and an information-recording apparatus (1) that is able to access said information-providing apparatus (2) via said network (4); and wherein
said information-recording apparatus (1) comprises:
an ID-information-acquisition device (17) which acquires ID information that corresponds to a program information recorded on a recording medium;
a protection-information-recognition device (17) that recognizes whether or not said recording medium has protection information for copyright protection of said program information when recording said program information recorded on said recording medium to another recording medium (12c);
an ID-information-sending device (16) which sends said ID-information to said information-providing apparatus (2) via said network when protection information is recognized by said protection-information-recognition device (17);
a corresponding-information-receiving device (16) that receives corresponding information related to said program information and that is sent from said information-providing apparatus (2) via said network (4) according to said ID information; and
an information-recording device (12a) which records said corresponding information that was received by said corresponding-information-receiving device (16) on to said other recording medium (12c) instead of said program information; and wherein
said information-providing apparatus (2) comprises:
an ID-information-receiving device (23) that receives said ID information sent from said information-recording apparatus (1) via said network (4);
a corresponding-information-acquisition device (24) that acquires said corresponding information based on said ID information; and
a corresponding-information-sending device (23) which sends said corresponding information to said information-recording apparatus (1) via said network (4).

2. The information-providing system of claim 1 wherein when recording program information that is recording on said recording medium onto another recording medium (12c), said information-recording apparatus (1) records said corresponding information on to said other recording medium (12c) instead of said program information by way of said ID-information-sending device (16) and said corresponding-information-receiving device (16) when it is not possible to record said program information from said recording medium to said other recording medium (12c) regardless of whether or not there is said protection information.

3. The information-providing system of claim 1 or 2 wherein said information-recording apparatus (1) further comprises:
a trial-information-receiving device (16) which receives trial information that is related to said program information and that is sent from said information-providing apparatus (2) according to said ID information via said network (4);
an information-reproduction device (12b) which reproduces said received trial information; and
a corresponding-information-request device (16, 17) which prompts the user to request said corresponding information after said trial information has been reproduced by said information-reproduction device (12b); and wherein
said information-providing apparatus (2) further comprises:
a trial-information-acquisition device (24) which acquires said trial information based on said ID information; and
a trial-information-sending device (23) which sends said trial information to said information-recording apparatus (1) via said network (4); and wherein
said corresponding-information-sending device (23) sends said corresponding information to said information-recording apparatus (1) only when there was a request from said information-recording apparatus (1) for said corresponding information.

4. The information-providing system of any one of claim 1 to 3 wherein said information-recording apparatus (1) further comprises:
a user-information-acquisition device (17) which acquires user information that is set for each apparatus or for each said recording medium; and
a user-information-sending device (16) which sends said acquired user information to said information-providing apparatus (2) via said network (4); and wherein
said information-providing apparatus (2) further comprises
a user-information-receiving device for receiving said user information sent from said information-recording apparatus (1); and wherein
said corresponding-information-sending device (23) determines based on said user information whether or not access is improper access, and when it determines that access is improper access, it does not send said corresponding information to said information-recording apparatus (1).

5. The information-providing system of any one of claim 1 to 4 wherein
said information-recording apparatus (1) further comprises
a cost-information-receiving device (16) which receives the cost corresponding to said corresponding information via said network (4); and wherein
said information-providing apparatus (2) further comprises:
a cost-information-acquisition device (24) which acquires said cost information; and
a cost-information-sending device (23) which sends said acquired cost information to said information-recording apparatus (1) via said network (4).

6. The information-providing system of claim 5 wherein
said information-providing apparatus (2) further comprises
a user-information-management device (24) which manages said user information; and wherein
said cost-information-acquisition device (24) acquires said cost information based on said user information managed by said user-information-management device (24).

7. The information-providing system of claim 5 or 6 wherein
said information-recording apparatus (1) further comprises
a cost-information-supply device (17) which supplies the user with said cost information; and wherein
said corresponding-information-request device (16, 17) prompts the user to request said corresponding information after said cost information has been supplied to the user by said cost-information-supply device (17).

8. The information-providing system of any one of claim 5 to 7 wherein
said cost information is information showing the bill for said corresponding information.

9. The information-providing system of any one of claim 1 to 8 wherein
said recording medium is a removable-type recording medium that is owned by said user.

10. The information-providing system of any one of claim 1 to 9 wherein
said information-recording device (12a) correlates said corresponding information with said ID information and records them on said other recording medium (12c).

11. The information-providing system of any one of claim 1 to 10 wherein
said ID-information-sending device (16) determines whether or not said corresponding information correlated with said ID information is recorded on said other recording medium (12c), and when it is determined that it is recorded, it does not send said ID information.

12. An information-recording apparatus (1) that is capable of accessing an information-providing apparatus (2) via a network (4), and comprising:
an ID-information-acquisition device (17) which acquires ID information that corresponds to a program information recorded on a recording medium;
a protection-information-recognition device (17) that recognizes whether or not said recording medium has protection information for copyright protection of said program information when recording said program information recorded on said recording medium to another recording medium (12c);
an ID-information-sending device (16) which sends said ID-information to said information-providing apparatus (2) via said network (4) when said protection information is recognized;
a corresponding-information-receiving device (16) which receives corresponding information related to said program information that is sent from said information-providing apparatus (2) via said network (4) according to said ID information; and
an information-recording device (12a) which records said corresponding information on to said other recording medium (12c).

13. The information-recording apparatus (1) of claim 12 further comprising:
a trial-information-receiving device (16) which receives trial information that is related to said program information and that is sent from said information-providing apparatus (2) according to said ID information via said network (4),
an information-reproduction device (12b) which reproduces said trial information, and
a corresponding-information-request device (16, 17) which prompts the user to request said corresponding information after said trial information has been reproduced by said information-reproduction device (12b).

14. The information-recording apparatus (1) of claim 12 or 13 further comprising:
a user-information-acquisition device (17) which acquires user information that is set for each apparatus or for each said recording medium; and
a user-information-sending device (16) which sends said acquired user information to said information-providing apparatus (2) via said network (4).

15. The information-recording apparatus (1) of any one of claim 12 to 14 further comprising:
a cost-information-receiving device (16) which receives cost information according to said corresponding information via said network (4).

16. The information-recording apparatus (1) of claim 15 further comprising:
a cost-information-supply device (17) which supplies said user with said received cost information; and wherein
said corresponding-information-request device (16, 17) prompts the user to request said corresponding information after said cost information has been supplied by said cost-information-supply device (17).

17. An information-providing apparatus (2) that provides information to an information-recording apparatus (1) via a network (4) and comprising:
an ID-information-receiving device (23) that receives ID information that corresponds to a program information recorded on a recording medium and that is sent from said information-recording apparatus (1) via said network (4);
a corresponding-information-acquisition device (24) which acquires corresponding information related to said program information based on said ID information; and
a corresponding-information-sending device (23) which sends said corresponding information to said information-recording apparatus (1) via said network (4).

18. The information-providing apparatus (2) of claim 17 further comprising:
a trial-information-acquisition device (24) which acquires trial information related to said program information based on said ID information; and
a trial-information-sending device (23) which sends said trial information to said information-recording apparatus (1) via said network (4); and wherein
said corresponding-information-sending device (23) sends said corresponding information to said information-recording apparatus (1) only when there is a request from said information-recording apparatus (1) for said corresponding information.

19. The information-providing apparatus (2) of claim 17 or 18 further comprising:
a user-information-receiving device for receiving user information from said information-recording apparatus (1) that was set for each information-recording apparatus (1) or for each said recording medium; and wherein
said corresponding-information-sending device (23) determines whether or not there was improper access based on said user information, and when it determines that there was improper access, it does not send said corresponding information to said information-recording apparatus (1).

20. The information-providing apparatus (2) of any one of claim 17 to 19 further comprising:
a cost-information-acquisition device (24) which acquires cost information according to said corresponding information; and
a cost-information-sending device (23) which sends said cost information to said information-recording apparatus (1) via said network (4).

21. The information-providing apparatus (2) of claim 20 further comprising
a user-information-management device (24) which manages said user information; and wherein
said cost-information-acquisition device (24) acquires cost information based on said user information managed by said user-information-management device (24).

22. The information-providing system of any one of claim 1 to 11 comprising
a recording medium on which an information-providing program is recorded which is readable by a plurality of computers and that the program causes said plurality of computers to function as said information-recording apparatus (1) and said information-providing apparatus (2).

23. A recording medium on which an information-recording program is recorded, and which is readable by a computer that is capable of accessing an information-providing apparatus (2) via a network (4),the program causing the computer to function as the information-recording apparatus (1) of any one of claim 12 to 16 that:
an ID-information-acquisition device (17) which acquires ID information that corresponds to a program information recorded on a recording medium;
a protection-information-recognition device (17) which recognizes whether or not said recording medium has protection information for copyright protection of said program information when recording said program information recorded on said recording medium to another recording medium (12c);
an ID-information-sending device (16) which sends said ID-information to said information-providing apparatus (2) via said network when protection information is recognized by said protection-information-recognition device (17);
a corresponding-information-receiving device (16) which receives corresponding information related to said program information and that is sent from said information-providing apparatus (2) via said network (4) according to said ID information; and
an information-recording device (12a) which records said corresponding information that was received by said corresponding-information-receiving device (16) on to said other recording medium (12c) instead of said program information.

24. A recording medium on which an information-providing program is recorded, and which is readable by a computer that provides information to an information-recording apparatus (1) via a network (4), the program causing the computer to function as the information-providing apparatus (2) of claim 17 to 21 that:
an ID-information-receiving device (23) that receives ID information that corresponds to a program information recorded on a recording medium and that is sent from said information-recording apparatus (1) via said network (4);
a corresponding-information-acquisition device (24) which acquires corresponding information related to said program information based on said ID information; and
a corresponding-information-sending device (23) which sends said corresponding information to said information-recording apparatus (1) via said network (4).

25. An information-providing method of an information providing system comprising an information-providing apparatus (2) that provides information via a network (4), and an information-recording apparatus (1) that can access said information-providing apparatus (2) via said network (4), and wherein:
said information-recording apparatus (1) comprises:
an ID-information-acquisition process (17) of acquiring ID information that corresponds to program information recorded on a recording medium;
a protection-information-recognition process (17) of recognizing whether or not said recording medium has protection information for copyright protection of said program information when recording said program information recorded on said recording medium to another recording medium (12c); and
an ID-information-sending process (16) of sending said acquired ID-information to said information-providing apparatus (2) via said network (4) when said protection information is recognized in said protection-information -recognition process (17); and
said information-providing apparatus (2) comprises:
an ID-information-receiving process (23) of receiving said ID information sent from said information-recording apparatus (1) via said network (4);
a corresporiding-information-acquisition process (24) of acquiring said corresponding information based on said ID information; and
a corresponding-information-sending process (23) of sending said corresponding information to said information-recording apparatus (1) via said network (4); and wherein
said information-recording apparatus (1) further comprises:
a corresponding-information-receiving process (16) of receiving said corresponding information that is related to said program information and that is sent from said information-providing apparatus (2) via said network (4) according to said ID information; and
an information-recording process (12a) of recording said corresponding information that was received by said corresponding-information-receiving (16) device on to said other recording medium (12c).
